Europäisches Patentamt

European Patent Office

Office européen des brevets

(19)

(11) Publication number: **0 059 435**
B1

# EUROPEAN PATENT SPECIFICATION

(45) Date of publication of patent specification: 07.01.88

(21) Application number: 82101448.7

(22) Date of filing: 25.02.82

(51) Int. Cl.⁴: **G 09 B 29/10,** G 06 F 15/20, G 09 G 1/16

(54) Image display device.

(30) Priority: 04.03.81 JP 30700/81

(43) Date of publication of application:
08.09.82 Bulletin 82/36

(45) Publication of the grant of the patent:
07.01.88 Bulletin 88/01

(84) Designated Contracting States:
DE FR GB

(56) References cited:
GB-A-2 013 890
US-A-4 197 590

IBM TECHNICAL DISCLOSURE BULLETIN, vol.
21, no. 4, September 1978, pages 1424-1426,
New York, USA; D.G. ABRAHAM: "Rotating
image data"

PROCEEDINGS 1979 CARNAHAN
CONFERENCE ON CRIME
COUNTERMEASURES, 16th-18th May 1979,
pages 123-126, edited by J.S. JACKSON, USA;

J.F. O'CONNOR: "Computer map generation in
an automatic vehicle monitoring system"

(73) Proprietor: NISSAN MOTOR CO., LTD.
No.2, Takara-cho, Kanagawa-ku
Yokohama-shi Kanagawa-ken 221 (JP)

(72) Inventor: Yamaki, Kiyoshi c/o Nissan Motor
Company, Ltd.
Oppama Plant 1, Natsushima-cho
Yokosuka-shi Kanagawa-ken (JP)
Inventor: Suzuki, Hidetaka c/o Nissan Motor
Company, Ltd.
Oppama Plant 1, Natsushima-cho
Yokosuka-shi Kanagawa-ken (JP)
Inventor: Tanaka, Haruto c/o Nissan Motor
Company, Ltd.
Oppama Plant 1, Natsushima-cho
Yokosuka-shi Kanagawa-ken (JP)
Inventor: Takeuchi, Yasuhisa c/o Nissan Motor
Company, Ltd.
Oppama Plant 1, Natsushima-cho
Yokosuka-shi Kanagawa-ken (JP)

(74) Representative: Patentanwälte TER MEER -
MÜLLER - STEINMEISTER
Mauerkircherstrasse 45
D-8000 München 80 (DE)

Courier Press, Leamington Spa, England.

# Description

The present invention relates to a display as defined in the preamble of claim 1 for displaying of graphics, characters, and other images simultaneously on a matrix screen.

Conventional display devices of the type which are mounted in front of driver's seat in an automotive vehicle for displaying a drive map describing roads on a screen comprise: a memory for storing a graphic pattern data having a storage capacity corresponding to the number of picture elements on the display screen such that the graphic data, character data and other data such as size and position data for characters constituting a word indication, e.g., a name of place are stored integrally; a signal generator for generating and outputting a rotation angle signal to rotate the graphic image on the screen, such as a vehicle traveling directional detector which outputs a voltage signal according to the change of the direction at which the vehicle travels; and a display control circuit which controls the data stored in the graphic memory according to the rotation angle signal from the signal generator, see for example the document "Proc. 1979 Carnahan Conference on Crime Countermeasures", 16th-18th May 1979, p. 123—126, edited by J. S. Jackson, USA; J. F. O'Connor: "Computer map generation in an automatic vehicle monitoring system"; this document however does not specifically mention the above rotation of the image on the screen.

In such a conventional display device however, there is a problem that it takes time for a driver to recognize the alphanumerals and marks superimposed on the map pattern reversed or inclined with respect to the vertical axis of the screen at an angle when the image on the screen is rotated according to the traveling direction of the automotive vehicle.

With the invention as defined in the attached claim 1 a technical solution has been found to overcome the above-described problem.

The present invention is based on the idea to provide a display of images on a screen, wherein a graphic data such as a map and alphanumeric and mark data are stored in separate memory units, one memory unit for storing the alphanumeric and mark data and positional data on a coordinate position of the alphanumeric and mark data to be displayed on the screen and the other memory for storing the graphic pattern data, so that any position of the alphanumerals and marks, etc., are shifted integrally into a rotated position so as to provide an upright view for a driver when the graphic image is rotated at any given angle.

Document US—A—4,197,590 which has been used for defining the pre-characterizing portion of claim 1 discloses in common with the present invention a computer graphics display system including a random access raster memory for storing data to be displayed, a raster memory control unit for writing data into the raster memory, a video control unit for controlling information display on a CRT-display screen, a micro-control unit for controlling the function and timing of the raster memory control unit and for the video control unit, and a computer adapted for facilitating data exchange between the micro-control unit and a host computer. The displayed image can have a high complexity with essentially no problem of display flicker. Zoom and pan features allow the use of a very complex stored image in a flexible manner, and a split-screen technique enable an operator to work on a very complex picture at a detailed level while still having an overview of the total picture, or any portion thereof, simultaneously presented before him. The split-screen feature also allows the simultaneous display of alphanumeric messages such as prompts, menus, or X—Y read-outs added to the graphics display. For this purpose, usually a small area of the raster memory is reserved. An XOR feature allows a selective erase that restores lines crossing or concurrent with erased lines. This XOR feature permits parts of the drawings to be moved or "dragged" in to places without erasing other parts of the drawing. The said document, however, does not teach an independent control of a character word superimposed on a graphic pattern displayed on the screen unit according to a rotation of the graphic pattern by a certain angle.

The features and advantages of the present invention will be better appreciated from the following description taken in conjunction with the accompanying drawings in which like reference numerals designate corresponding element, in which:

Fig. 1 is a functional block diagram of a conventional display of images on a screen:

Figs. 2(A) and (B) are the same image on the screen viewed before a graphic pattern of a map is rotated and after the graphic image is reversed at a given angle;

Fig. 3 is a block diagram of a display of images on a screen according to the present invention;

Fig. 4 is a block diagram of a control device of the images shown in the block by Fig. 3; and

Figs. 5(A) and (B) are polar coordinates for explaining each position of the graphic image over a rotational position.

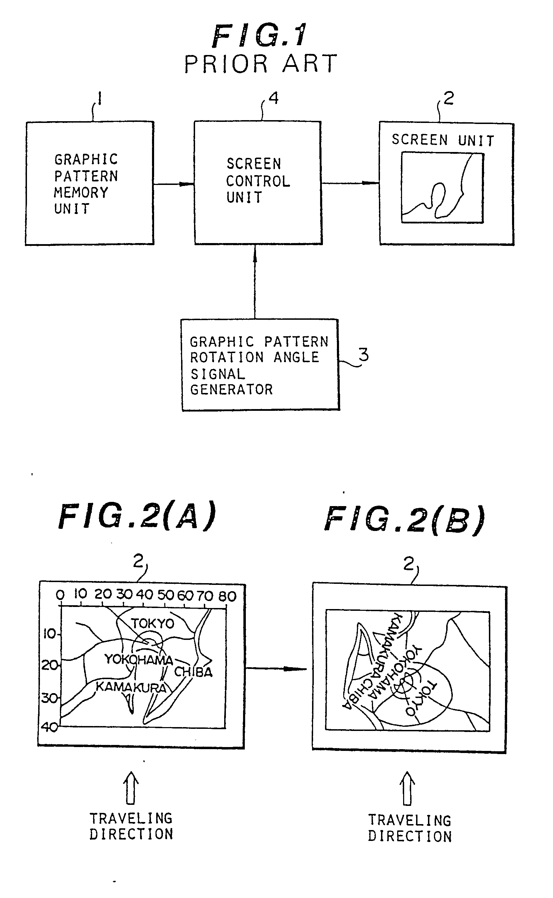

Reference will be made to the drawings and first in Fig. 1 which is a simplified block diagram of a conventional display of images on a screen.

In Fig. 1, the conventional display of images on the screen comprises: (a) a memory unit 1 for storing a graphic data having a storage capacity corresponding to the number of picture elements on the screen of a screen unit 2 which also stores the size and position data of alphanumerals and marks when the alphanumerals and/or symbols are superimposed on the graphic pattern; (b) a graph rotational signal generator 3, e.g., a vehicle traveling detection device which outputs a rotation command signal on a basis of the change in the direction toward which the vehicle travels;

and (c) a screen control unit 4 which controls the data stored in the memory unit 1 so that the graph pattern and alphanumerals are inclined by a specified angle depending on the output signal of the graph rotational signal generator 3 with respect to a horizontal angle. ·

In such a conventional display of images on the screen, there is a problem that in a case when a map represented in the form of graph is rotated in accordance with the direction toward which the vehicle travels, the alphanumerals of a name of place, marks (e.g., symbolic representation of post office, police station, shrine, etc.), and so forth are rotated altogether as shown in Fig. 2(B) from a reference position shown in Fig. 2(A) wherein a north-and-south direction is a vertical position of the screen.

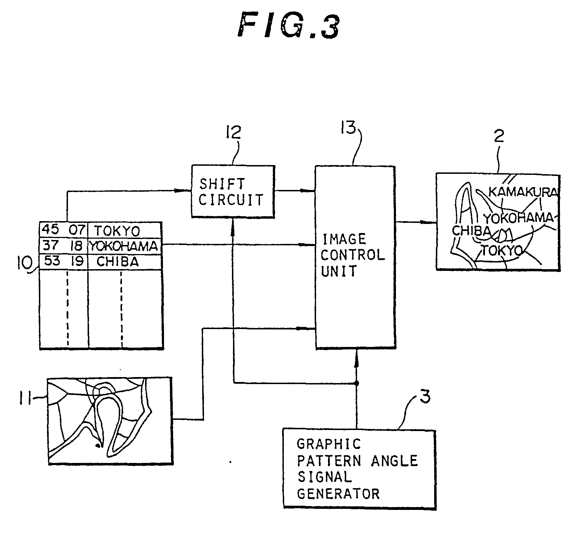

Fig. 3 is a circuit block diagram of a preferred embodiment according to the present invention. In Fig. 3, a new display of images on the screen comprises: (a) a memory unit 10 which stores the alphanumeric and mark data represented by specified codes corresponding to the alphanumerals indicating names of places and marks and display position (coordinate positions of the alphanumerals and marks); (b) another memory unit 11 which stores the graphic data such as a map to be displayed on the screen; (c) a coordinate position shift circuit 12 which reads X—Y coordinate positions from the memory unit 10 and shifts them into newly changed X—Y coordinate positions when the rotation for the graphic pattern on the screen is made; and (d) an image control unit 13 which rotates the displayed graph stored within the memory unit 11 according to the output indication of the graphic pattern rotation angle generator 3, reads the alphanumeric or symbolic code stored within the memory unit 10, converts them to previously assigned letters or marks, and controls them so that the letters or marks are superimposed on the displayed graph so as to provide an upright display on the screen. The display of images on the screen of such construction as described above displays a graphic pattern rotated about a center of the screen at an angle specified by the graphic pattern rotational angle generator 3. For the alphanumeric or symbolic data stored in the memory unit 10, the coordinate position shift circuit 12 reads coordinate position data such as letters and shifts these data into the corresponding coordinate positions after the graphic pattern is rotated at the specified angle. In addition, the image control unit 13 displays the words and marks on the screen 2 after fetching the alphanumeric or symbolic code stored in the memory unit 10 via the shift circuit 12. Therefore, the words and marks are not rotated as seen from a position outside the screen after the graphic pattern is rotated for indicating the vehicle travel direction. Consequently, the travelling direction of the vehicle can easily be recognized and the name of place, symbol marks can rapidly be identified as well.

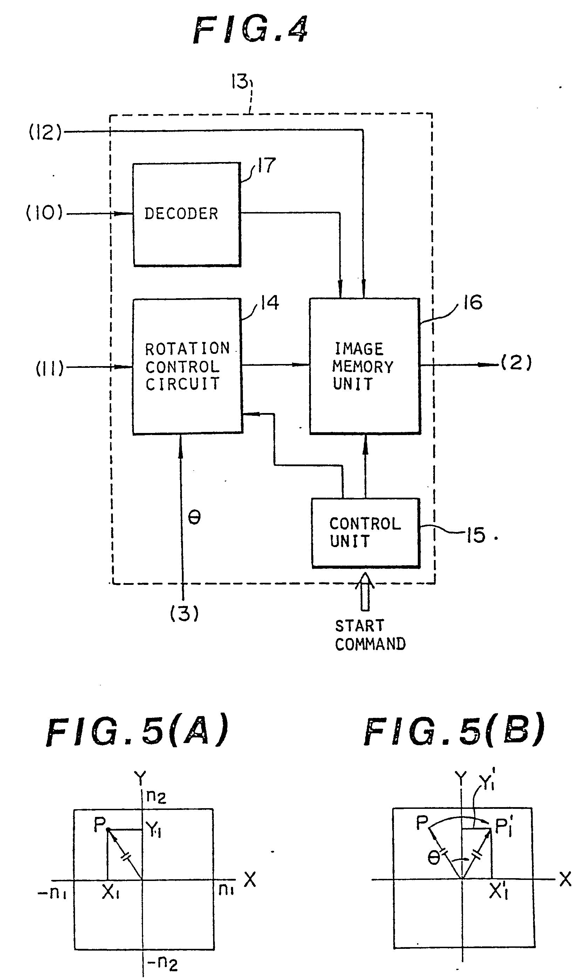

Furthermore, a method of controlling images on the screen as described hereinafter with reference to Figs. 4, 5(A), and 5(B).

In Fig. 4 which shows an internal configuration of the image control unit 13, shown in Fig. 3, numeral 14 denotes a rotation control circuit for controlling the rotation angle of a graphic pattern fed from the memory unit 11. The rotation control circuit 14 receives the output indication of the graphic pattern rotation angle generator 3 to control the rotation angle of the graphic pattern, as described above. Numeral 17 denotes a decoder which receives codes on alphanumerals or marks representing place-names and marks stored in the memory unit 10, decodes and sends them to an image memory unit 16, i.e., to addresses specified by the shift circuit 12 according to the position data thereof. When an actuation signal is received from a control unit 15, the rotation control circuit 14 issues a command to transfer the stored data of the graphic memory unit 11 described above into an image memory unit 16 of a buffer type. At this time a graphic pattern data stored in the memory until 11 is transferred into the image memory unit 16 in such a way that the graphic pattern data is transferred sequentially into each location of the image memory unit 16 which corresponds to each coordinate position of the screen 2 after the graphic rotational angle signal generator 3 specifies the rotation control unit 14 to rotate $\Theta$ with respect to the original position stored in the memory unit 11. In more detail, the graphic memory unit 11 has a storage capacity corresponding to the number of picture elements $2n_1 \times 2n_2$ as shown in Fig. 5(A). If a graphic pattern image is rotated with a center of the image as an axis (in this case, let the central coordinate be $X = 0$, $Y = 0$), the data of each picture element in the graphic memory unit 11 is read out sequentially and the position data is calculated in a polar coordinate system on a basis of the rotation angle $\Theta$ given by the graphic rotation angle signal generator 3. The read data is stored into a coordinate position of the two-dimensional coordinate axis rotated at the angle $\Theta$. At the time of polar coordinate calculation, consider the original coordinate position $P(X_1, Y_1)$ before such rotation is made and a new coordi-nate position $P'(Y_1', Y_1')$ after the rotation through an angle $\Theta$ is made as shown in·Fig. 5(B), $P'(X_1', Y_1')$ is given by

$$X_1' = X_1 \cos \Theta + Y_1 \sin \Theta$$

$$Y_1' = -X_1 \sin \Theta + Y_1 \cos \Theta.$$

Shift circuit 12 makes the calculation as given by the above-described equations for each point of the coordinates $X = -n_1$ through $n_1$, $Y = -n_2$ through $n_2$.

If the calculation of trigonometric function is made through a digital circuitry, a technique of approximation on a basis of Taylor's expansion or of table look up is used.

In this way, the image memory unit 16 stores a graphic pattern rotated at the angle of $\Theta$ with

respect to the graphic pattern stored in the graphic pattern memory unit 11 already described. For the alphanumeric and symbolic data, the data stored within the alphanumeric data memory unit 10 is decoded into the corresponding letters or marks by means of a decoder 17. The control unit 15 performs a control so that these letters or marks are placed at the two-dimensional coordinate indicated by the coordinates position shift circuit 12.

As a result of this, a graphic pattern rotated through an angle of $\Theta$ with respect to that stored within the graphic pattern memory unit 11 and letters and marks whose positions are accordingly adjusted are stored within the image memory unit 16 and displayed on the screen 2 sequentially by means of the control unit 15.

As described above, according to the present invention there is provided a display device of images on the screen which comprises: (a) an alphanumeric data memory unit which stores codes corresponding to the letters and marks and their positions on the screen; (b) a graphic pattern memory unit; (c) a coordinate position shift circuit which changes the position of the letters and marks; (d) an image control unit wherein the graphic pattern is rotated through an angle specified by the graphic pattern rotational signal generator and the letters or marks corresponding to the alphanumeric codes stored within the alphanumeric data memory unit are superimposed on the graphic pattern, whereby the displayed letters and marks themselves do not incline at a rotation angle of the graphic pattern and shifts their displayed positions according to the rotational movement of the screen even if the graphic pattern is rotated at an angle depending on, e.g., the vehicle traveling direction. Therefore, it is practically advantageous to utilize such a device as described above for displaying a road map images on the screen mounted in an automotive vehicle. For example, when the vehicle is turned right or left by an operator driving toward a target direction as viewed from the map, the traveling direction of the vehicle is always at the top of the screen, but the letters and marks superimposed on the map do not rotate when the map is rotated and thus easiness in recognizing the letters indicating place names and other marks can be achieved.

**Claims**

1. An image display vehicle having:
— a screen unit (2);
— a memory (10, 11) having a first memory area (11) in which a graphic pattern to be displayed on said screen unit (2) is stored and a second memory area (10) in which a character word to be superimposed on the graphic pattern and the coordinate position on the screen unit are stored:
— an image control unit (4, 13) for moving on the screen unit (2) the graphic pattern and character word displayed in response to a command signal; and
— a signal generator (3) which outputs the command signal to the image control unit (4, 13), characterized in that
— the graphic pattern and character word are mutually controlled independently on the basis of the command signal from the signal generator (3),
— a shift circuit (12) is provided, intervened between the second memory area (10) and image control unit (13) for shifting the coordinate position of the character word on the screen unit (6) fetched from the second memory area (10) to that rotated by the angle corresponding to the command signal from the signal generator (3), and in that
— the image control unit (13) rotates the graphic pattern displayed on the screen unit (2) by an angle with respect to a reference position of the graphic pattern in response to the command signal from the signal generator (3) and simultaneously superimposes the character word whose position is shifted by the shift circuit (12) on the rotated graphic pattern so as to always provide an upright view of the character word from the screen unit (2).

2. The image display device as set forth in claim 1, which is installed in an automotive vehicle and said signal generator (3) outputs the command signal whose value changes according to a direction toward which the automotive vehicle travels.

3. The image display device as set forth in claim 2, wherein the graphic pattern is a drive map whose reference position is such that a north-and-south direction coincides vertical position of said screen unit.

4. The image display device as set forth in claim 1, characterized in that the shift circuit (12) shifts the position of the character word according to the expressions:

$$X_1' = X_1 \cos \Theta + Y_1 \sin \Theta$$

$$Y_1' = -X_1 \sin \Theta + Y_1 \cos \Theta$$

wherein $X_1$ and $Y_1$ denote rectangular coordinates of the character word on the screen unit (2) at a predetermined position on the graphic pattern before the graphic pattern is rotated through the angle $\Theta$, and $X_1'$ and $Y_1'$ denote new rectangular coordinates of the character word on the screen unit at the predetermined position on the graphic pattern after the graphic pattern has been rotated through the angle $\Theta$.

**Patentansprüche**

1. Bildanzeigeanordnung mit
— einer Bildschirmeinheit (2);
— einem Speicher (10, 11) mit einem ersten Speicherbereich (11), in dem eine auf der Bildschirmeinheit (2) wiederzugebende Graphik gespeichert ist, und einem zweiten Speicherbereich (10), in dem ein der Graphik zu überlagerndes Zeichenwort und seine Position auf der Bildschirmeinheit gespeichert sind;
— einer Bildsteuereinheit (4, 13) zur Bewegung der dargestellten Graphik und des Zeichenworts auf der Bildschirmeeinheit (2) in Abhängigkeit von einem Befehlssignal; und

— einem Signalgenerator (3), der das Befehlssignal für die Bildsteuereinheit (4, 13) abgibt; dadurch gekennzeichnet, daß

— die Graphik und das Zeichenwort gemeinsam und unabhängig voneinander durch das Befehlssignal des Signalgenerators (3) gesteuert werden,

— ein Verschiebeschaltkreis (12) zwischen dem zweiten Speicherbereich (10) und der Bildsteuereinheit (13) zur Verschiebund der Lage eines Zeichenwortes auf der Bildschirmeinheit (6), das aus dem zweiten Speicherbereich (10) abgerufen wurde, in eine Position vorgesehen ist, die der aufgrund des Befehlssignales des Signalgenerators (3) um einen bestimmten Winkel Gedrehten entspricht, und daß

— die Bildsteuereinheit (13) die auf der Bildschirmeinheit (2) dargestellte Graphik in Abhängigkeit von dem Befehlssignal des Signalgenerators (3) in Bezug auf eine Referenzposition der Graphik um einen bestimmten Winkel dreht und gleichzeitig das Zeichenwort überlagert, dessen Position durch den Verschiebeschaltkreis (12) auf der gedrehten Graphik so verschoben wird, daß es immer aufrecht auf der Bildschirmeinheit (2) erscheint.

2. Bildanzeigeanordnung nach Anspruch 1, die in einem Kraftfahrzeug eingebaut ist und deren Signalgenerator (3) ein Befehlssignal abgibt, dessen Wert sich entsprechend der Fahrtrichtung des Kraftfahrzeuges ändert.

3. Bildanzeigeanordnung nach Anspruch 2, deren Graphik eine Straßenkarte ist, deren Referenzlage so ausgerichtet ist, daß die Nord-Südrichtung mit der vertikalen Richtung auf der Bildschirmeinheit überinstimmt.

4. Bildanzeigeanordnung nach Anspruch 1, dadurch gekennzeichnet, daß der Verschiebeschaltkreis (12) die Position eines Zeichenwortes entsprechend folgender Gleichungen verschiebt:

$$X_1' = X_1 \cos \Theta + Y_1 \sin \Theta$$

$$Y_1' = -X_1 \sin \Theta + Y_1 \cos \Theta$$

wobei $X_1$ und $Y_1$ rechtwinklige Koordinaten des Zeichenwortes auf der Bildschirmeinheit (2) an bestimmten Positionen der Graphik vor Verdrehung der Graphik um den Winkel $\Theta$ sind und $X_1'$ und $Y_1$ die neuen rechtwinkligen Koordinaten des Zeichenwortes auf der Bildschirmeinheit (2) in bestimmten Positionen auf der Graphik nach Verdrehung der Graphik um den Winkel $\Theta$ bedeuten.

## Revendications

1. Dispositif de visualisation d'image ayant:
— une unité formant écran (2);
— un mémoire (10, 11) ayant une première zone de mémoire (11) dans laquelle un motif graphique à visualiser à ladite unité formant écran (2) est stocké et une seconde zone de mémoire (10) dans laquelle un mot de caractère à superposer au motif graphique et la position en coordonnées à l'unité formant écran sont stockés;

— un unité de commande d'image (4, 13) pour déplacer sur l'unité formant écran (2) le motif graphique et le mot de caractère affichés en réponse à un signal de commande; et

— un générateur de signaux (3) qui délivre le signal de commande à l'unité de commande d'image (4, 13), caractérisé en ce que

— le motif graphique et le mot de caractère sont mutuellement contrôlés indépendamment sur la base du signal de commande du générateur de signaux (3)

— un circuit de décalage (12) est prévu, interposé entre la seconde zone de mémoire (10) et l'unité de commande d'image (13) pour décaler la position en coordonnées du mot de caractère sur l'unité formant écran (6) extraite de la seconde zone de mémoire (10) à celle tournée par l'angle correspondant au signal de commande du générateur de signaux (3), et en ce que

— l'unité de commande d'image (13) tourne le motif graphique affiché sure l'unité formant écran (2) d'un angle par rapport à une position de référence du motif graphique en réponse au signal de commande du générateur de signaux (3) et superpose simultanément le mot de caractère dont la positilon est décalée par le circuit de décalage (12) sur le motif graphique tourné afin de toujours produire une vue verticale du mot de caractère à partir de l'unité formant écran (2).

2. Dispositif de visualisation d'image selon la revendication 1, qui est installé dans un véhicule automobile et le générateur de signaux précité (3) délivre le signal de commande dont la valeur change selon une direction vers laquelle les véhicule automobile se déplace.

3. Dispositif de visualisation d'image selon la revendication 2, dans lequel le motif graphique est une carte de conduite dont la position de référence est telle qu'une direction nord-et-sud coïncide à une position verticale de l'unité formant écran précitée.

4. Dispositif de visualisation d'image selon la revendication 1, caractérisé en ce que le circuit de décalage (12) décale la position du mot de caractère selon les expressions:

$$X_1' = {}_1 \cos \Theta + \sin \Theta$$

$$Y_1' = -X_1 \sin \Theta + Y_1 \cos \Theta$$

où $X_1$ et $Y_1$ désignent des coordonnées orthogonales du mot de caractère sur l'unité formant écran (2) à une position prédéterminée sur le motif graphique avant que le motif graphique soit tourné de l'angle $\Theta$, et $X_1'$ et $Y_1'$ désignent des nouvelles coordonnées orthogonales du mot de caractère sur l'unité formant écran à la position prédéterminée sur le motif graphique après que le motif graphique ait été de l'angle $\Theta$.

# 0 059 435

## *FIG.1*
### PRIOR ART

## *FIG.2(A)*

## *FIG.2(B)*

TRAVELING
DIRECTION

TRAVELING
DIRECTION

1

**0 059 435**

# *FIG.3*

2

# FIG.4

FIG.5(A)

FIG.5(B)